# EUROPEAN PATENT APPLICATION

(11) **EP 3 783 559 A1**
(43) Date of publication of application: **24.02.2021**
(21) Application number: 19788332.5
(22) Date of filing: 15.04.2019
(51) Int. Cl.: G06Q 30/06

(54) **INFORMATION PROCESSING PROGRAM, INFORMATION PROCESSING DEVICE AND INFORMATION PROCESSING SYSTEM**

(30) Priority: 18.04.2018 JP 2018080101
(71) Applicant: Ient Inc., Tokyo 150-0001 (JP)
(72) Inventor: OMORI Tomohito, Tokyo 150-0001 (JP); HAYASHI Kazuhiro, Tokyo 104-0061 (JP)
(74) Representative: Jaekel, Robert Sebastian
(86) International application number: PCT/JP2019/016107
(87) International publication number: WO 2019/203179

(57) **Abstract**

An information processing program, an information processing apparatus, and an information processing system that receive an order without the necessity for a user to visit a shop and sell an item subjected to tax exemption processing without the necessity of online payment are provided.

A tax-free EC mediation server 1 as the information processing apparatus includes: a user information transmitting and receiving means 102 for receiving, from a portable terminal 2 used by a traveler 7 as the user, user information 111 identifying the traveler 7; a display information generating means 101 for generating display information for displaying, on the portable terminal 2, item information of an item which is sold in a store on an electronic commerce service provided by an EC server 3, with tax-free details; an order information transmitting means 104 for transmitting order information 112 for the traveler 7 to order an item to a hotel 60, a tax-free information transmitting means 106 for transmitting tax-free information 106 for preparing a tax exemption document to a terminal 4 of the hotel 60; and payment information transmitting means 107 for transmitting payment information 115 for making payment for the item to the terminal 4.

## Description

### Technical Field

The present invention relates to an information processing program, an information processing apparatus, and an information processing system.

### Background Art

There has been proposed, as prior art, an information processing apparatus that supports purchase of tax-free items (e.g., refer to Patent Literature 1).

The information processing apparatus disclosed in Patent Literature 1 receives, from a portable terminal operated by a user, positional information of the portable terminal, information of language used by the user and an ID of an item that the user wishes to purchase, identifies a shop from a shop database on the basis of the received positional information, identifies language on the basis of the language information, extracts, from an item database, item description information in the identified language on the basis of the received item ID, generates screen data on the basis of the identified shop and the extracted item description information, and transmits the screen data to the portable terminal, thereby displaying description of the item that the user wishes to purchase in the language used by the user on a display unit of the portable terminal. When the information processing apparatus has specific information such as discounts offered at the identified shop, the information processing apparatus reflects the information in the screen data. The information processing apparatus further determines whether tax exemption conditions are met by referring to a purchase list of items that the user is considering purchasing and reflects a result of the determination in the screen data.

### Citation List

### Patent Literature

Patent Literature 1: JP 2016-173700 A

### Summary of Invention

### Technical Problem

However, although the above information processing apparatus of Patent Literature 1 supports purchase of tax-free items by displaying the item description for the item that the user wishes to purchase and the shop where the user can purchase the item and performing determination about the tax exemption conditions, there is a problem in that it is necessary for the user to visit the real shop to order the item in the end. Moreover, although Patent Literature 1 describes that a service including tax exemption procedure can be received at an item receiving counter by making online payment for a tax-free item, the described effect cannot be achieved under the present circumstances where online payment for tax-free items is not allowed.

Thus, it is an object of the present invention to provide an information processing program, an information processing apparatus, and an information processing system that receive an order without the necessity for a user to visit a shop and sell an item subjected to tax exemption processing without the necessity of online payment.

### Solution to Problem

In order to achieve the above object, an aspect of the present invention provides an information processing program, an information processing apparatus, and an information processing system described below.
[1] An information processing program for causing a computer to function as:
   a user information transmitting and receiving means for receiving, from a terminal used by a user, user information identifying the user;
   a display information generating means for generating display information for displaying, on the terminal, item information of an item which is sold without tax exemption in a store on an electronic commerce service, with tax-free details by performing calculation of tax exemption and/or addition of information of tax exemption on the item information;
   an order information transmitting means for transmitting, on the basis of at least item information of an item selected by the user on the terminal, the received user information, and information of a tax-free shop designated by the user as a receiving place, order information which provides an instruction to deliver the item selected by the user to the tax-free shop to sell the item tax free by the tax-free shop to the store;
   a tax-free information transmitting means for transmitting, on the basis of at least the item information of the selected item and the user information, tax-free information for preparing a tax exemption document to a terminal of the tax-free shop; and
   a payment information transmitting means for transmitting, on the basis of at least the received selected item information and the received user information, payment information for the user to make payment for the selected item to the terminal of the tax-free shop.
[2] The information processing program according to [1] for further causing the computer to function as a settlement information transmitting and receiving means for generating settlement information for settling payment for an item that is sold or has been sold in the tax-free shop between the tax-free shop and the store, and transmitting the settlement information to the tax-free shop and the store.
[3] The information processing program according to [1] or [2], wherein the user information transmitting and receiving means receives, as the user information, at least a name, a nationality, a date of birth, a status of residence, a date of landing, a passport type, and a passport number.
[4] The information processing program according to any one of [1] to [3], wherein, when a total amount of the item selected by the user on the terminal does not meet tax exemption conditions, the display information generating means generates display information for displaying the item information with non-tax-free details.
[5] An information processing apparatus comprising:
   a user information transmitting and receiving means for receiving, from a terminal used by a user, user information identifying the user;
   a display information generating means for generating display information for displaying, on the terminal, item information of an item which is sold without tax exemption in a store on an electronic commerce service, with tax-free details by performing calculation of tax exemption and/or addition of information of tax exemption on the item information;
   an order information transmitting means for transmitting, on the basis of at least item information of an item selected by the user on the terminal, the received user information, and information of a tax-free shop designated by the user as a receiving place, order information which provide an instruction to deliver the item selected by the user to the tax-free shop to sell the item tax free by the tax-free shop to the store;
   a tax-free information transmitting means for transmitting, on the basis of at least the item information of the selected item and the user information, tax-free information for preparing a tax exemption document to a terminal of the tax-free shop; and
   a payment information transmitting means for transmitting, on the basis of at least the received selected item information and the received user information, payment information for the user to make payment for the selected item to the terminal of the tax-free shop.
[6] An information processing system comprising:
   a terminal used by a user;
   a store selling an item without tax exemption on an electronic commerce service;
   a terminal of a tax-free shop selling an item tax free; and
   an information processing apparatus including: a user information transmitting and receiving means for receiving, from the terminal, user information identifying the user; a display information generating means for generating display information for displaying, on the terminal, item information of an item which is sold without tax exemption in the store, with tax-free details by performing calculation of tax exemption and/or addition of information of tax exemption on the item information; an order information transmitting means for transmitting, on the basis of at least item information of an item selected by the user on the terminal, the received user information, and information of a tax-free shop designated by the user as a receiving place, order information to the store, the order information providing an instruction to deliver the item selected by the user to the tax-free shop to sell the item tax free by the tax-free shop; a tax-free information transmitting means for transmitting, on the basis of at least the item information of the selected item and the user information, tax-free information for preparing a tax exemption document to the terminal of the tax-free shop; and a payment information transmitting means for transmitting, on the basis of at least the received selected item information and the received user information, payment information for the user to make payment for the selected item to the terminal of the tax-free shop.

### Advantageous Effects of Invention

According to the above [1], [5], and [6], it is possible to receive an order without the necessity for a user to visit a shop and sell an item subjected to tax exemption processing without the necessity of online payment.

According to the above [2], it is possible to mediate settlement between the tax-free shop and the store for the item that is sold or has been sold in the tax-free shop.

According to the above [3], at least the name, the nationality, the date of birth, the status of residence, the date of landing, the passport type, and the passport number can be received as the user information.

According to the above [4], when the total amount of the selected item does not meet the tax exemption conditions, the item information can be displayed with non-tax-free details on the terminal.

### Brief Description of Drawings

Fig. 1 is a schematic diagram illustrating an example of the configuration of a tax-free EC system according to an embodiment.
Fig. 2 is a block diagram illustrating a configuration example of a tax-free EC mediation server according to the embodiment.
Fig. 3 is a schematic diagram illustrating a configuration example of user information.
Fig. 4 is a schematic diagram illustrating a configuration example of order information.
Fig. 5 is a schematic diagram illustrating a configuration example of tax-free shop information.
Fig. 6 is a schematic diagram illustrating a configuration example of tax-free information.
Fig. 7 is a schematic diagram illustrating a configuration example of payment information.
Fig. 8 is a schematic diagram illustrating a configuration example of settlement information.
Fig. 9A is a schematic diagram illustrating an example of a screen displayed on a display unit of a portable terminal.
Fig. 9B is a schematic diagram illustrating an example of the screen displayed on the display unit of the portable terminal.
Fig. 10A is a schematic diagram illustrating an example of the screen displayed on the display unit of the portable terminal.
Fig. 10B is a schematic diagram illustrating an example of the screen displayed on the display unit of the portable terminal.
Fig. 11 is a schematic diagram illustrating an example of the screen displayed on the display unit of the portable terminal.
Fig. 12 is a schematic diagram illustrating an example of the screen displayed on the display unit of the portable terminal.
Fig. 13 is a schematic diagram illustrating an example of the screen displayed on the display unit of the portable terminal.
Fig. 14 is a schematic diagram illustrating an example of the screen displayed on the display unit of the portable terminal.
Fig. 15 is a schematic diagram illustrating an example of the screen displayed on the display unit of the portable terminal.
Fig. 16A is a schematic diagram illustrating an example of a screen displayed on display units of terminals.
Fig. 16B is a schematic diagram illustrating an example of the screen displayed on the display units of the terminals.
Fig. 17 is a flowchart illustrating operation of the tax-free EC system.

### Description of Embodiments

### [Embodiment]

### (Configuration of Tax-free EC System)

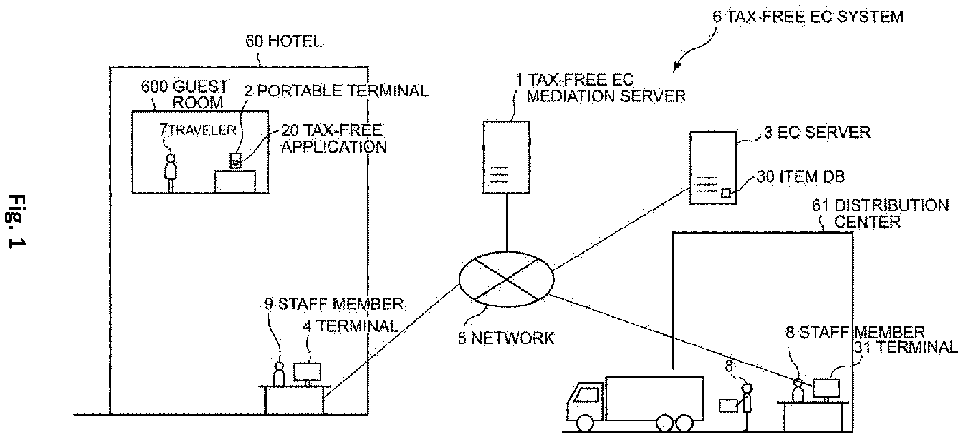

Fig. 1 is a schematic diagram illustrating an example of the configuration of a tax-free EC system according to an embodiment.

A tax-free electronic commerce (EC) system 6 as an information processing system includes a tax-free EC mediation server 1 as an information processing apparatus, a portable terminal 2, an EC server 3, a terminal 31, and a terminal 4 which are communicably connected to each other through a network 5. The portable terminal 2 is operated by a traveler 7 who stays at a hotel 60. The terminal 31 is operated by a staff member 8 of a distribution center 61. The terminal 4 is operated by a staff member 9 of the hotel 60. The hotel 60 is an accommodation facility having a guest room 600 for the traveler 7 from abroad and also licensed by the tax office as a tax-free shop that sells items tax free to the traveler 7 from abroad (or has a tax-free shop annexed thereto). The distribution center 61 is a facility for dispatching items carried in a virtual store on an electronic commerce service provided by the EC server 3. Note that although the virtual store is premised on non-store retailing, the virtual store may be provided with a real store that actually sells items.

The tax-free EC mediation server 1 is a server-type information processing apparatus and operated in response to requests from the portable terminal 2, the EC server 3, the terminal 31, and the terminal 4. The tax-free EC mediation server 1 is provided with, inside a main body thereof, electronic components such as a central processing unit (CPU) having a function for processing information, a hard disk drive (HDD), and a flash memory. The tax-free EC mediation server 1 mainly mediates purchase of an item that is sold without tax exemption in the store on the electronic commerce service provided by the EC server 3 by displaying the item with tax-free details to the traveler 7 operating the portable terminal 2, allows the traveler 7 to receive the purchased item and make payment for the purchased item at a counter of the hotel 60 where the traveler 7 stays, helps tax-free processing of the hotel 60, and mediates settlement of payment between the hotel 60 and the store that has sold the item through the electron commerce service by transmitting and receiving information to and from the portable terminal 2, the EC server 3, the terminal 31, and the terminal 4.

The portable terminal 2 is an information processing apparatus such as a smartphone and provided with, inside a main body thereof, electronic components such as a CPU having a function for processing information and a flash memory. For example, the portable terminal 2 is provided in the guest room 600 of the hotel 60 and lent to the traveler 7 using the guest room 600 free of charge (or for a fee) during stay in the hotel 60. A tax-free application 20 is previously installed on the portable terminal 2. The portable terminal 2 communicates with the tax-free EC mediation server 1 by operating the tax-free application 20 and receives an operation of the traveler 7 for purchasing an item tax free in the store on the electronic commerce service provided by the EC server 3. Note that although the portable terminal 2 is used inside the guest room 600 in the drawing, the traveler 7 can carry and use the portable terminal 2 outside the hotel 60. A location where the tax-free application 20 is used is not limited to any particular location as long as the portable terminal 2 can be wirelessly connected to the network 5. The portable terminal 2 may be a personal item of the traveler 7. In this case, the tax-free application 20 is used by installing the tax-free application 20 on the portable terminal 2.

The EC server 3 is a server-type information processing apparatus and operated in response to requests from the tax-free EC mediation server 1 and the terminal 31. The EC server 3 is provided with, inside a main body thereof, electronic components such as a CPU having a function for processing information and a flash memory. The EC server 3 provides the electronic commerce service and includes an item DB 30, which is a database of items sold in the store on the electronic commerce service. The EC server 3 enables purchase of an item in the item DB 30 at a tax-free price using the portable terminal 2 through the tax-free EC mediation server 1. When the item is purchased, the EC server 3, for example, issues an instruction to deliver the item by communicating with the terminal 31 installed in the distribution center 61. Note that the EC server 3 may provide an electronic commerce service that is not for tax exemption for domestic users without going through the tax-free EC mediation server 1. In this case, item information of the item DB 30 is provided to the tax-free EC mediation server 1 through an application programming interface (API).

The terminal 31 is an information processing apparatus such as a personal computer (PC) and provided with, inside a main body thereof, electronic components such as a CPU having a function for processing information and a flash memory. For example, the terminal 31 is installed in the distribution center 61 which delivers items carried in the store on the electronic commerce service provided by the EC server 3 and mainly performs display of information for the item delivery instruction to the staff member 8 by communicating with the EC server 3.

The terminal 4 is an information processing apparatus such as a PC and provided with, inside a main body thereof, electronic components such as a CPU having a function for processing information and a flash memory. For example, the terminal 4 is installed at the counter of the hotel 60. The terminal 4 displays information necessary for the traveler 7 to receive an item purchased in the store on the electronic commerce service and information necessary for the traveler 7 to make payment for the item, and displays and outputs information necessary for the hotel 60 to perform tax exemption procedure as a tax-free shop to the tax office by communicating with the tax-free EC mediation sever 1. Moreover, the terminal 4 performs settlement of payment between the hotel 60 and the store that has sold the item on the electronic commerce service by communicating with the tax-free EC mediation sever 1.

The network 5 is a communication network capable of performing high-speed communication. For example, the network 5 is a wired or wireless communication network such as the Internet, an intranet, or a local area network (LAN).

### (Configuration of Information Processing Apparatus)

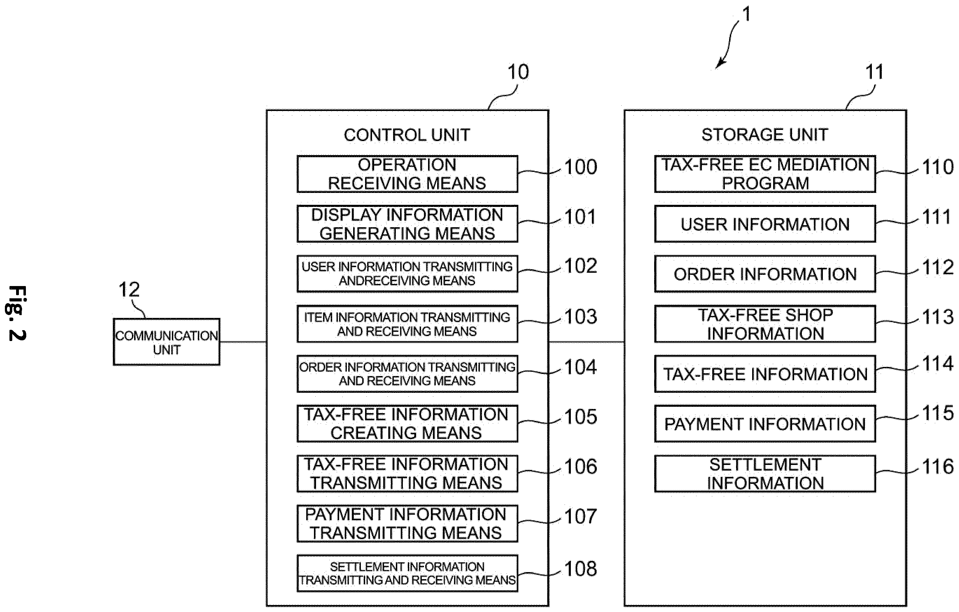

Fig. 2 is a block diagram illustrating a configuration example of the tax-free EC mediation server 1 according to the embodiment.

The tax-free EC mediation server 1 includes, for example, the CPU and controls each unit. The tax-free EC mediation server 1 is provided with a control unit 10 which executes various programs, a storage unit 11 which includes a storage medium such as a flash memory and stores information, and a communication unit 12 which communicates with outside through the network 5.

The control unit 10 functions as an operation receiving means 100, a display information generating means 101, a user information transmitting and receiving means 102, an item information transmitting and receiving means 103, an order information transmitting and receiving means 104, a tax-free information creating means 105, a tax-free information transmitting means 106, a payment information transmitting and receiving means 107, and a settlement information transmitting and receiving means 108 by executing a tax-free EC mediation program 110 described later.

The operation receiving means 100 receives operation information that is generated by the traveler 7 operating the portable terminal 2 from the portable terminal 2 through the communication unit 12. The operation receiving means 100 receives, through the communication unit 12, operation information that is generated by the staff member 9 operating the terminal 4 and operation information that is generated by the staff member 8 operating the terminal 31.

The display information generating means 101 generates display information for displaying screens on a display unit of the portable terminal 2, a display unit of the terminal 4, and a display unit of the terminal 31 in accordance with operation of each of the means 100 to 108 and transmits the generated display information to the portable terminal 2, the terminal 4, and the terminal 31 through the communication unit 12.

The user information transmitting and receiving means 102 receives information input by the traveler 7 through the portable terminal 2, such as a name, a nationality, a date of birth, a status of residence, a date of landing, a passport type, a passport number, and an e-mail address of the traveler 7, and stores the received information as user information 111 in the storage unit 11 and transmits the received information to the terminal 4, the terminal 31, and the EC server 3 as necessary.

The item information transmitting and receiving means 103 receives required item information from the item DB 30 which is information of items carried in the EC server 3. The display information generating means 101 changes the received item information to item information with tax-free details by performing calculation of tax exemption and/or addition of information of tax exemption and generates display information for displaying the item information with tax-free details on the portable terminal 2.

The order information transmitting and receiving means 104 stores, as order information 112, information of one or more items that are selected for purchase by the traveler 7 from items displayed on the portable terminal 2 and information of an item receiving date and an item receiving place in the storage unit 11 and transmits these pieces of information to the EC server 3, the terminal 4, and the terminal 31 as necessary.

The tax-free information creating means 105 creates tax-free information 114 which is information necessary for tax exemption procedure on the basis of the user information 111, the order information 112, and tax-free shop information 113. Note that the tax-free information 114 may be electronic data of a created tax exemption document. The tax-free information creating means 105 may be installed in an external server (not illustrated).

The tax-free information transmitting means 106 transmits the tax-free information 114 to the terminal 4. Note that when the tax-free information creating means 105 is installed outside, similarly, the tax-free information transmitting means 106 may also be installed in the external server, and the tax-free information 114 may be directly transmitted to the terminal 4.

The payment information transmitting and receiving means 107 creates payment information 115 for making payment for item purchase and transmits the payment information 115 to the terminal 4. Note that the payment information 115 is created on the basis of the user information 111, the order information 112, and the tax-free shop information 113.

The settlement information transmitting and receiving means 108 generates information for performing settlement of payment between the hotel 60 and the store on the EC server 3, stores the generated information as settlement information 116 in the storage unit 11, and transmits the settlement information 116 to the terminal 4 and the EC server 3.

The storage unit 11 stores, for example, the tax-free EC mediation program 110 as an information processing program for causing the control unit 10 to operate as each of the means 100 to 108, the user information 111, the order information 112, the tax-free shop information 113, the tax-free information 114, the payment information 115, and the settlement information 116.

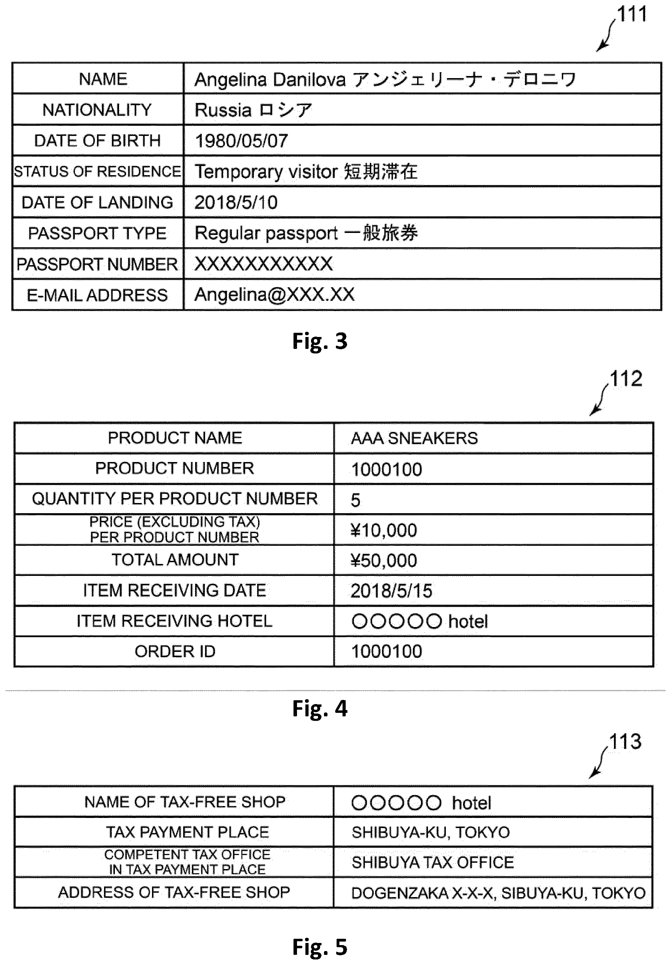

Fig. 3 is a schematic diagram illustrating a configuration example of the user information 111.

The user information 111 is information of the traveler 7, the information being input by the traveler 7 as a user, and includes the name, the nationality, the date of birth, the status of residence, the date of landing, the passport type, the passport number, and the e-mail address of the user.

Fig. 4 is a schematic diagram illustrating a configuration example of the order information 112.

The order information 112 is information of the item ordered by the traveler 7 as the user and includes a product name, a product number, a quantity per product number, a price per product number, a total amount, an item receiving date, an item receiving hotel, and an order ID of the item.

Fig. 5 is a schematic diagram illustrating a configuration example of the tax-free shop information 113.

The tax-free shop information 113 is information of a shop that is licensed as a tax-free shop by a competent tax office and includes a name of the tax-free shop, a tax payment place, the competent tax office in the tax payment place, and an address of the tax-free shop. Note that, although the illustrated tax-free shop information 113 is information of the single tax-free shop, the tax-free shop information 113 includes information of one or more tax-free shops.

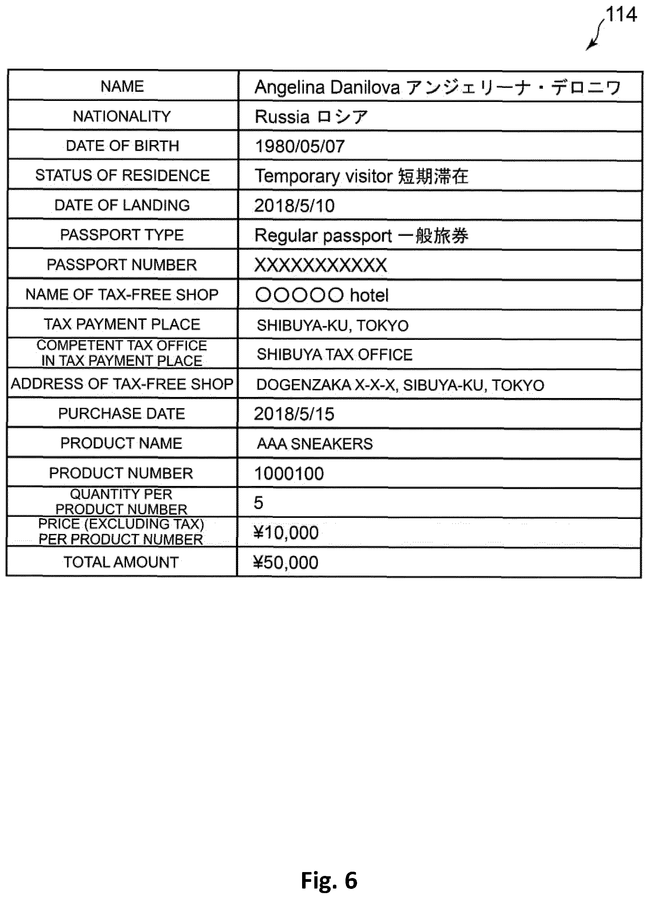

Fig. 6 is a schematic diagram illustrating a configuration example of the tax-free information 114.

The tax-free information 114 is information for preparing a tax exemption document necessary for tax exemption procedure. The tax-free information 114 includes the name, the nationality, the date of birth, the status of residence, the date of landing, the passport type, and the passport number of the user, the name of the tax-free shop, the tax payment place, the competent tax office in the tax payment place, the address of the tax-free shop, a purchase date when the user purchases the item, the product name, the product number, the quantity per product number, the price per product number, and the total amount.

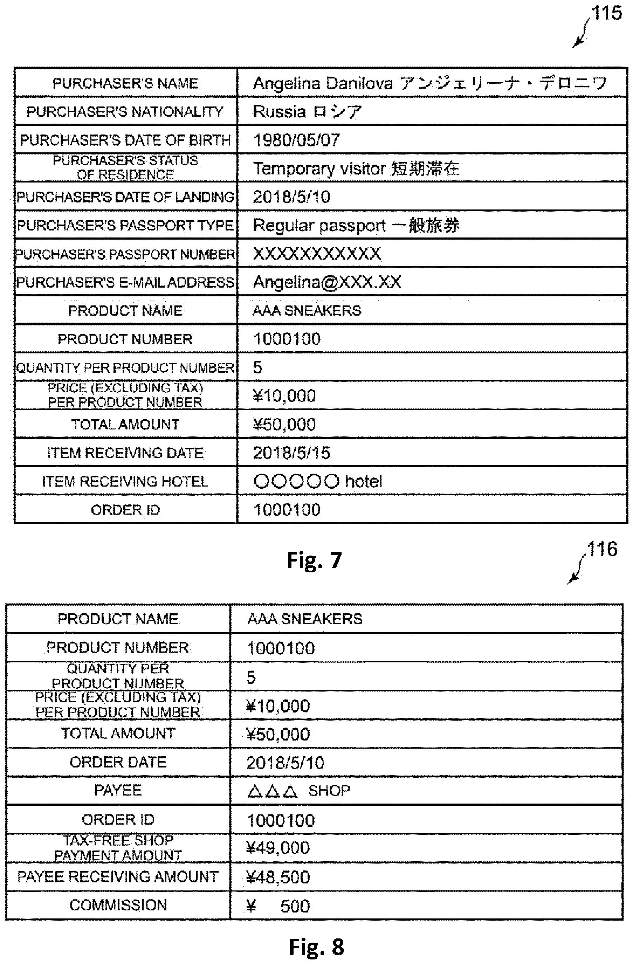

Fig. 7 is a schematic diagram illustrating a configuration example of the payment information 115.

The payment information 115 is information for making payment for the purchased item. The payment information 115 includes the purchaser's name, the purchaser's nationality, the purchaser's date of birth, the purchaser's status of residence, the purchaser's date of landing, the purchaser's passport type, the purchaser's passport number, the purchaser's e-mail address, the product name, the product number, the quantity per product number, the price per product number, the total amount, the item receiving date, the item receiving hotel, and the order ID.

Fig. 8 is a schematic diagram illustrating a configuration example of the settlement information 116.

The settlement information 116 is information for settling payment for the item traded between the hotel 60 as the tax-free shop and the virtual store. The settlement information 116 includes the product name, the product number, the quantity per product number, the price per product number, the total amount, an order date, a payee, and the order ID of the item for settlement.

### (Operation of Information Processing Apparatus)

Next, the action of the present embodiment will be described in (1) preparation operation, (2) item purchase operation, and (3) postprocessing operation.

### (1) Preparation Operation

First, the traveler 7 from abroad visits the hotel 60 for stay during stay in the visited country and checks in at the hotel 60 at the counter.

The staff member 9 of the hotel 60 performs the check-in of the traveler 7 using the terminal 4. At this time, the staff member 9 checks a passport of the traveler 7.

Next, the traveler 7 moves to the guest room 600 where the traveler 7 stays and starts using the portable terminal 2 provided in the guest room 600. The traveler 7 performs basic settings such as settings of language to be used. For example, the portable terminal 2 is lent to the traveler 7 free of charge. Note that the portable terminal 2 may be a personal item of the traveler 7 as long as the tax-free application 20 can operate on the portable terminal 2.

### (2) Item Purchase Operation

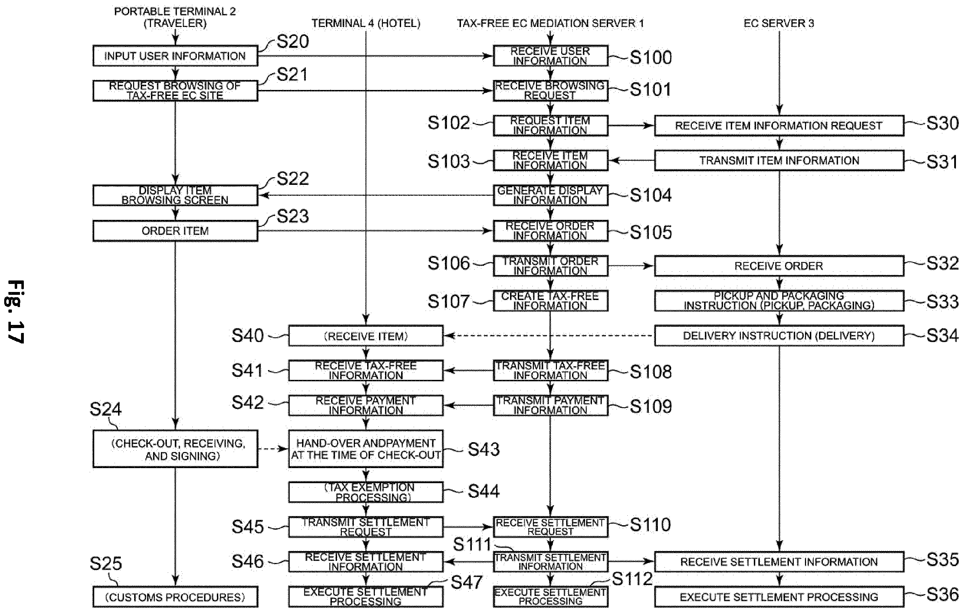

Fig. 17 is a flowchart illustrating operation of the tax-free EC system 6.

Next, the traveler 7 starts the tax-free application 20 by operating the portable terminal 2 to browse a tax-free EC site.

The portable terminal 2 starts the tax-free application 20 in accordance with the operation. The tax-free application 20 displays a screen (not illustrated) on the display unit of the portable terminal 2 and first requests input of the user information to the traveler 7.

The traveler 7 inputs, as the user information, the name, the nationality, the date of birth, the status of residence, the date of landing, the passport type, the passport number, and the e-mail address of the user. The portable terminal 2 receives the input and transmits the user information to the tax-free EC mediation server 1 (S20).

As illustrated in Fig. 3, the user information transmitting and receiving means 102 of the tax-free EC mediation server 1 receives the name, the nationality, the date of birth, the status of residence, the date of landing, the passport type, the passport number, and the e-mail address of the user and stores the received information as the user information 111 in the storage unit 11 (S100).

Next, the tax-free application 20 of the portable terminal 2 requests browsing of the tax-free EC site to the tax-free EC mediation server 1 (S21). Note that, at the same time, the portable terminal 2 transmits, for example, the information of the language to be used to the tax-free EC mediation server 1.

Next, the operation receiving means 100 of the tax-free EC mediation server 1 receives the browsing request (S101) and requests item information to the EC server 3 (S102).

The EC server 3 receives the item information request from the tax-free EC mediation server 1 (S30), and extracts the requested item information from the item DB 30 and transmits the extracted item information to the tax-free EC mediation server 1 (S31). Note that the item information is information for non-tax-free sale.

The display information generating means 101 of the tax-free EC mediation server 1 receives the item information from the EC server 3 (S103), and generates and transmits display information for displaying a screen on the display unit of the portable terminal 2 in the language used by the traveler 7 (S104). In the present embodiment, as an example, English is described as the language to be used. The item information received from the EC server 3 is changed to item information with tax-free details by performing calculation of tax exemption and/or addition of information of tax exemption.

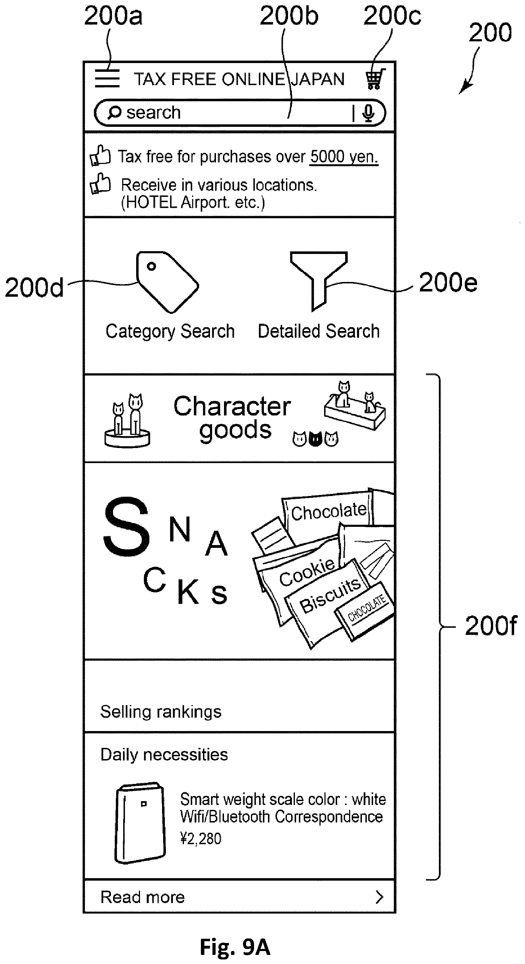

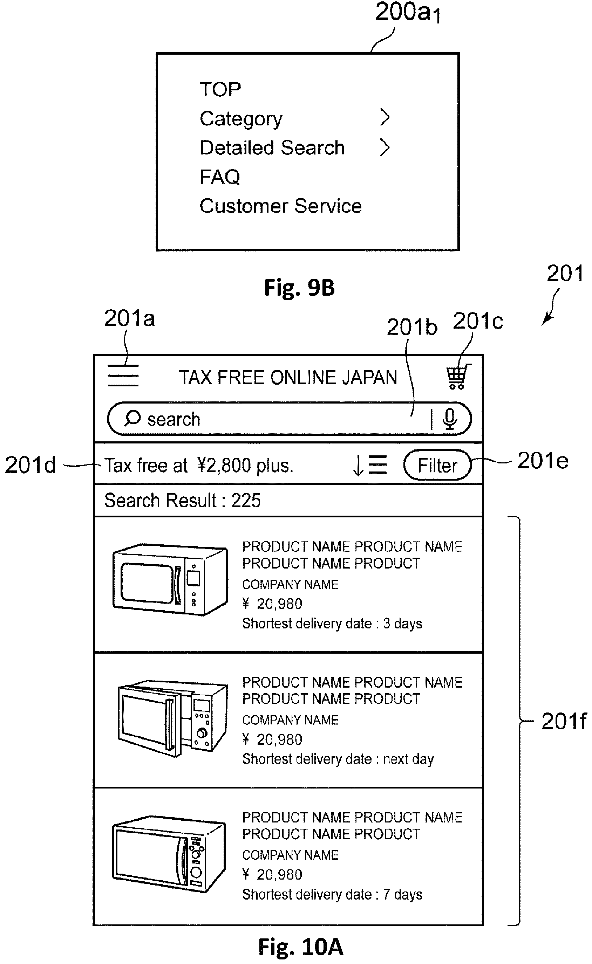

The portable terminal 2 displays an item browsing screen on the display unit on the basis of the received display information (S22). For example, the item browsing screen has a configuration as illustrated in Figs. 9A and 9B.

Figs. 9A and 9B are schematic diagrams illustrating examples of the screen displayed on the display unit of the portable terminal 2.

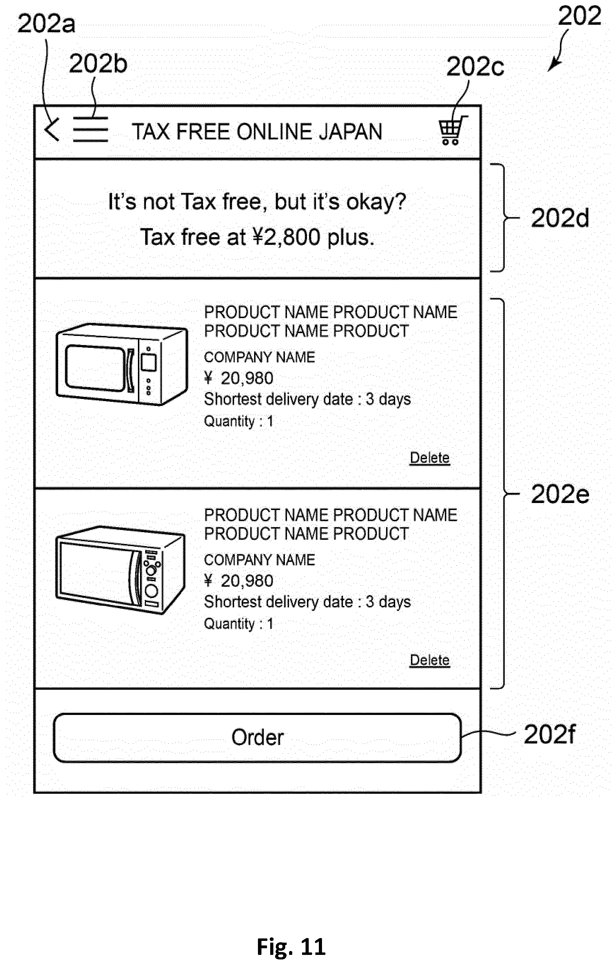

A screen 200 illustrated in Fig. 9A is an initial screen displayed on the display unit of the portable terminal 2. The screen 200 includes a menu display button 200a for displaying a menu 200a1 illustrated in Fig. 9B, a search text input box 200b which receives input of text for search, a cart contents display button 200c for displaying a selected item list (a screen 202, Fig. 11), a category search button 200d for searching for items by category, a detailed search button 200e for searching for items by a plurality of search items, and an item display field 200f for displaying a recommended item, a top-selling item, or the like.

The menu 200a1 illustrated in Fig. 9B includes "TOP" for returning to the initial screen, "Category" for displaying categories of items, "Detailed Search" for moving to a screen for searching for items by a plurality of search items, "FAQ" for moving to a screen including frequently asked questions and answers for the questions, and "Customer Service" for moving to a screen of a help desk for users.

The traveler 7 checks the contents of the screen 200 displayed on the display unit of the portable terminal 2, checks information of each item in the item display field 200f, and searches for a desired item through the menu 200a1, the search text input box 200b, the category search button 200d, and the detailed search button 200e.

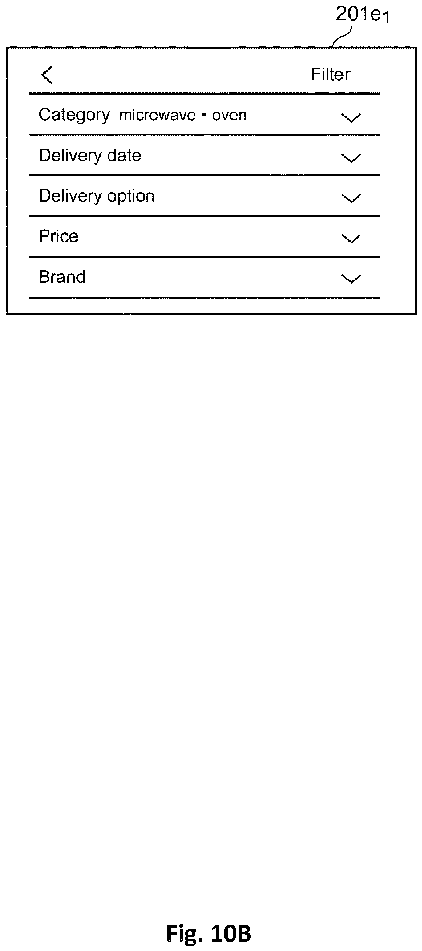

The portable terminal 2 communicates with the tax-free EC mediation server 1 in accordance with the operation of the traveler 7, and the display information generating means 101 of the tax-free EC mediation server 1 generates and transmits display information for displaying individual item information. For example, an individual item information browsing screen has a configuration as illustrated in Figs. 10A and 10B.

Figs. 10A and 10B are schematic diagrams illustrating examples of the screen displayed on the display unit of the portable terminal 2.

A screen 201 illustrated in Fig. 10A is a screen for searching for items, the screen being displayed on the display unit of the portable terminal 2. The screen 201 includes a menu display button 201a for displaying the menu 200a1 illustrated in Fig. 9B, a search text input box 201b which receives input of text for search, a cart contents display button 201c for displaying the selected item list (the screen 202, Fig. 11), a display field 201d displaying an additional amount necessary to meet tax exemption conditions, a filter button 201e for displaying a filter menu 200e1 illustrated in Fig. 10B, and an item information display field 201f displaying item information. Only an item that is delivered to the traveler 7 before the checkout date and time may be displayed in the item information display field 201f. Moreover, an item that cannot be handled in the hotel 60 to be a receiving place, such as an item that exceeds a storage place limit, may not be displayed in the item information display field 201f.

The filter menu 200e1 illustrated in Fig. 10B is a menu for filtering items to be displayed. The filter menu 200e1 includes "Category" for filtering items by category, "Delivery date " for filtering items by delivery date, "Delivery option" for filtering items by delivery option, "Price" for filtering items by price, and "Brand" for filtering items by brand.

Among the contents of the screen 201 displayed on the display unit of the portable terminal 2, the traveler 7 checks item information in the item information display field 201f, performs a narrowing-down search of items through the menu 201e1, and searches for a different item through the menu 201a or the search text input box 201b. Then, when a desired item is found, the traveler 7 selects the item and adds the selected item to a cart. The traveler 7 also checks information in the display field 201d, and further selects an item and adds the selected item to the cart taking into consideration the additional amount necessary to meet the tax exemption conditions.

The portable terminal 2 communicates with the tax-free EC mediation server 1 in accordance with the operation of the traveler 7, and the display information generating means 101 of the tax-free EC mediation server 1 generates and transmits display information for displaying selected item information (cart). For example, a browsing screen for the selected item information (cart) has a configuration as illustrated in Fig. 11.

Fig. 11 is a schematic diagram illustrating an example of the screen displayed on the display unit of the portable terminal 2.

The screen 202 illustrated in Fig. 11 is a screen for displaying a selected item list, the screen being displayed on the display unit of the portable terminal 2. The screen 202 includes a back button 202a for returning to the screen 201 illustrated in Fig. 10A, a menu display button 202b for displaying the menu 200a1 illustrated in Fig. 9B, a cart contents display button 202c for displaying the screen 202, a display field 202d displaying the additional amount necessary to meet the tax exemption conditions, a selected item display field 202e displaying the selected item list, and an order button 202f for confirming purchase.

The traveler 7 checks the contents of the screen 202 displayed on the display unit of the portable terminal 2 and operates the order button 202f when confirming purchase taking into consideration the additional amount necessary to meet the tax exemption conditions, the additional amount being displayed in the display field 202d, and the selected item list displayed in the selected item display field 202e. Note that the total amount needs to be more than 5,000 yen excluding tax to meet the tax exemption conditions. Moreover, in the case of consumable items, the total amount needs to be less than 500,000 yen excluding tax. Thus, an amount to the upper limit may be displayed in the display field 202d.

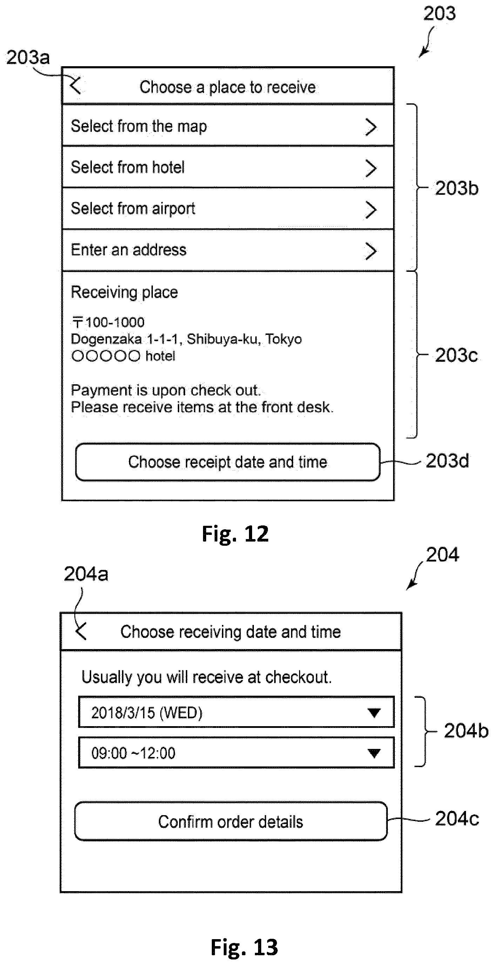

The portable terminal 2 communicates with the tax-free EC mediation server 1 in accordance with the operation of the traveler 7, and the display information generating means 101 of the tax-free EC mediation server 1 generates and transmits display information for displaying a screen for choosing an item delivery destination. For example, the screen for choosing the item delivery destination has a configuration as illustrated in Fig. 12.

Fig. 12 is a schematic diagram illustrating an example of the screen displayed on the display unit of the portable terminal 2.

A screen 203 illustrated in Fig. 12 is a screen for inputting a receiving place of the purchased item, the screen being displayed on the display unit of the portable terminal 2. The screen 203 includes a back button 203a for returning to the screen 202 illustrated in Fig. 11, a selection menu 203b for inputting the receiving place, an address display field 203c displaying details of the address of the input receiving place, and a date and time choosing button 203d for proceeding to the next screen for choosing the item receiving date and time.

Among the contents of the screen 203 displayed on the display unit of the portable terminal 2, the traveler 7 selects a method for inputting the receiving place through the selection menu 203b, inputs the address by the selected method, checks the details of the address of the receiving place displayed in the address display field 203c, and operates the receiving date and time choosing button 203d when confirming the address. Note that the hotel 60 (the facility provided with the tax-free shop) where the traveler 7 stays can be selected as the receiving place. Alternatively, in a case where the traveler 7 stays at a plurality of hotels during stay in the country, any hotel provided with a tax-free shop can be selected as the receiving place. Moreover, the receiving place is not limited to a hotel, and a counter installed in any place licensed as a tax-free shop, such as an airport, a station, or a bus terminal, may be selected as the receiving place.

The portable terminal 2 communicates with the tax-free EC mediation server 1 in accordance with the operation of the traveler 7, and the display information generating means 101 of the tax-free EC mediation server 1 generates and transmits display information for displaying a screen for choosing the item receiving date and time. For example, the screen for choosing the item receiving date and time has a configuration as illustrated in Fig. 13.

Fig. 13 is a schematic diagram illustrating an example of the screen displayed on the display unit of the portable terminal 2.

A screen 204 illustrated in Fig. 13 is a screen for inputting the receiving date and time of the purchased item, the screen being displayed on the display unit of the portable terminal 2. The screen 204 includes a back button 204a for returning to the screen 203 illustrated in Fig. 12, a pull-down menu 204b for choosing the receiving date and time, and an order details confirming button 204c for proceeding to the next screen for confirming order details.

Among the contents of the screen 204 displayed on the display unit of the portable terminal 2, the traveler 7 chooses the receiving date and time through the pull-down menu 204b and operates the order details confirming button 204c when confirming the receiving date and time.

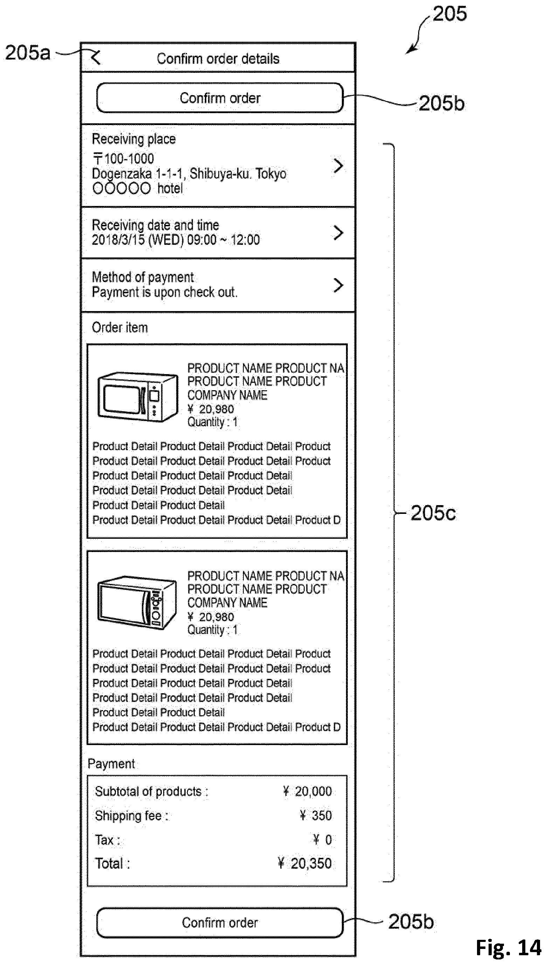

The portable terminal 2 communicates with the tax-free EC mediation server 1 in accordance with the operation of the traveler 7, and the display information generating means 101 of the tax-free EC mediation server 1 generates and transmits display information for displaying a screen for confirming order details. For example, the screen for confirming order details has a configuration as illustrated in Fig. 14.

Fig. 14 is a schematic diagram illustrating an example of the screen displayed on the display unit of the portable terminal 2.

A screen 205 illustrated in Fig. 14 is a screen for confirming order details, the screen being displayed on the display unit of the portable terminal 2. The screen 205 includes a back button 205a for returning to the screen 204 illustrated in Fig. 13, an order confirming button 205b for confirming the order, and a display field 205c displaying information of the details of the order.

Among the contents of the screen 205 displayed on the display unit of the portable terminal 2, the traveler 7 checks information of the details of the order in the display field 205c and operates the order confirming button 205b when confirming the order.

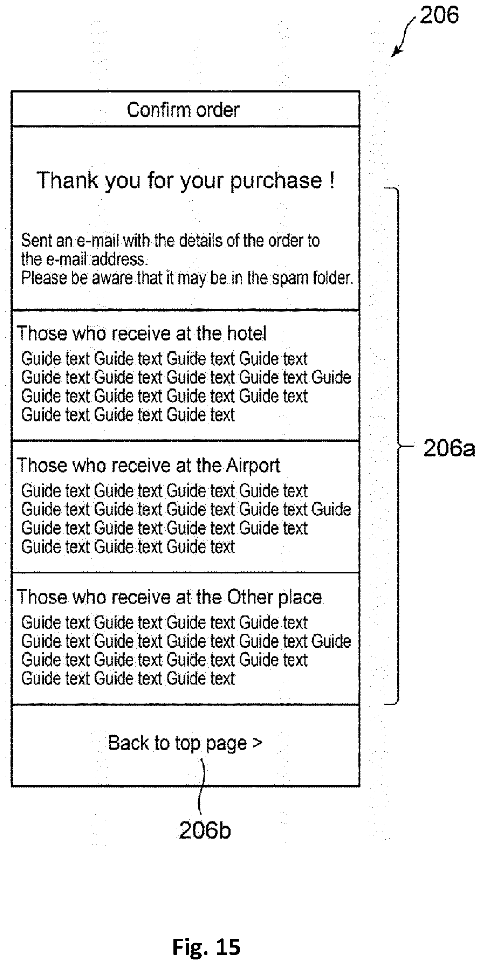

The portable terminal 2 communicates with the tax-free EC mediation server 1 in accordance with the operation of the traveler 7 and orders the item on the basis of the input information (S23), and the display information generating means 101 of the tax-free EC mediation server 1 generates and transmits display information for displaying that the order has been confirmed. For example, the screen for displaying that the order has been confirmed has a configuration as illustrated in Fig. 15.

Fig. 15 is a schematic diagram illustrating an example of the screen displayed on the display unit of the portable terminal 2.

A screen 206 illustrated in Fig. 15 is a screen for displaying that the order has been confirmed, the screen being displayed on the display unit of the portable terminal 2. The screen 206 includes a display field 206a describing that detailed information of the order has been sent to the e-mail address and describing a receiving method and a back button 206b for returning to the screen 200 illustrated in Fig. 9.

The traveler 7 checks the contents of the screen 206 displayed on the display unit of the portable terminal 2 and finishes the order.

When receiving the order request from the portable terminal 2, the order information transmitting and receiving means 104 of the tax-free EC mediation server 1 receives, as the order information 112, the product name, the product number, the quantity per product number, the price per product number, and the total amount, the item receiving date, the item receiving hotel, and the order ID of the item and stores the received order information 112 in the storage unit 11 as illustrated in Fig. 4 (S105).

Next, the order information transmitting and receiving means 104 of the tax-free EC mediation server 1 transmits the order information 112 to the EC server 3 (S106). Note that when the total amount does not meet the tax exemption conditions, the order information 112 is transmitted after correcting the total amount to an amount including tax.

The EC server 3 receives the order by receiving the order information 112 (S32), transmits information of pickup, packaging, and delivery of the item to the terminal 31 on the basis of details of the order information 112 to instruct the staff member 8 to pick up and package the item (S33) and to deliver the item to the item receiving hotel (S34). In the distribution center 61, as stipulated by the tax-free sales standards, a precautionary statement indicating not to open the package until it is taken out of the country is stuck to the package, and the package is sealed with a tape that enables determination of whether the package has been opened or not. Alternatively, normal packaging may be performed in the distribution center 61, and packaging complying with the tax-free sales standards may be performed in the hotel 60.

The packaged item is delivered to the hotel 60 from the distribution center 61, and the hotel 60 receives the item (S40).

Next, the tax-free information creating means 105 of the tax-free EC mediation server 1 creates the tax-free information 114 for preparing a tax exemption document necessary for tax exemption procedure on the basis of the user information 111, the order information 112, and the tax-free shop information 113 (S107). Specifically, the tax-free information creating means 105 creates the tax-free information 114 with the purchase date as illustrated in Fig. 6 by extracting the name, the nationality, the date of birth, the status of residence, the date of landing, the passport type, and the passport number of the user from the user information 111, searching for the tax-free shop information 113 corresponding to the item receiving hotel of the order information 112 and extracting the name of the tax-free shop, the tax payment place, the competent tax office in the tax payment place, and the address of the tax-free shop, and extracting the product name, the product number, the quantity per product number, the price per product number, and the total amount of the item.

Next, the tax-free information transmitting means 106 of the tax-free EC mediation server 1 transmits the created tax-free information 114 to the terminal 4 (S108). The terminal 4 receives the tax-free information 114 (S41). The terminal 4 prints out tax exemption documents (the record of purchase card and the covenant of purchaser) on the basis of the tax-free information 114.

As illustrated in Fig. 7, the tax-free EC mediation server 1 creates the payment information 115 by combining the user information 111 and the order information 112 and transmits the payment information 115 to the terminal 4 (S109). The terminal 4 receives the payment information 115 (S42) and prints a receipt and the like on the basis of the payment information 115.

Next, when checking out the hotel 60, the traveler 7 receives the purchased item from the staff member 9 at the counter, makes payment for the total amount of the purchased item together with, for example, a service charge in the hotel, and signs the tax exemption document (the covenant of purchaser) prepared by the staff member 9 (S24). As a requirement of tax-free sale, the traveler 7 presents the passport to the staff member 9, and the staff member 9 affixes the tax exemption document (the record of purchase card) to the passport and puts a stamp on the document over the edge. The staff member 9 performs payment processing using the terminal 4 upon handing the item to the traveler 7 and receiving the total amount, performs the above tax exemption procedure, and gives the receipt to the traveler 7 (S43).

### (3) Postprocessing Operation

Then, the traveler 7 submits the tax exemption document (the record of purchase card) affixed to the passport to the customs at the time of departure and takes the tax-free item out of the country (S25).

The staff member 9 of the hotel 60 retains the tax exemption document (the covenant of purchaser) for about seven years (S44). Note that the customs procedures and the tax exemption processing described herein are based on the standards at the time of filing the present application. Thus, if there is any change in the standards, the present application will be adapted to the changed standards without changing the gist of the present invention.

Next, the terminal 4 transmits a settlement request for the item whose payment has been completed to the tax-free EC mediation server 1 (S45). When the tax-free EC mediation server 1 receives the settlement request from the terminal 4 (S110), the tax-free EC mediation server 1 creates the settlement information 116 illustrated in Fig. 8 on the basis of the order information 112 and transmits the settlement information 116 to the terminal 4 and the EC server 3 (Sill).

The terminal 4 and the EC server 3 receive the settlement information 116 (S46, S35). The terminal 4 makes payment for a tax-free shop payment amount (S47), the tax-free EC mediation server 1 receives a commission (S112), and the EC server 3 receives a payee receiving amount (S36), thereby executing the settlement processing. The settlement processing is an example. Settlement may be performed for a plurality of transactions together, and the payment method is not limited to the described method.

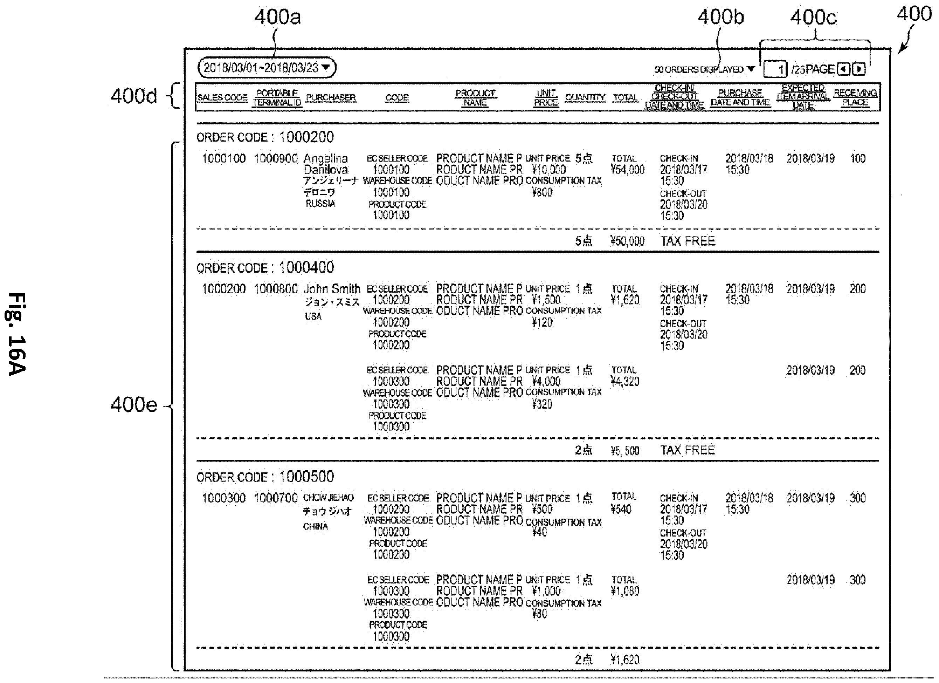

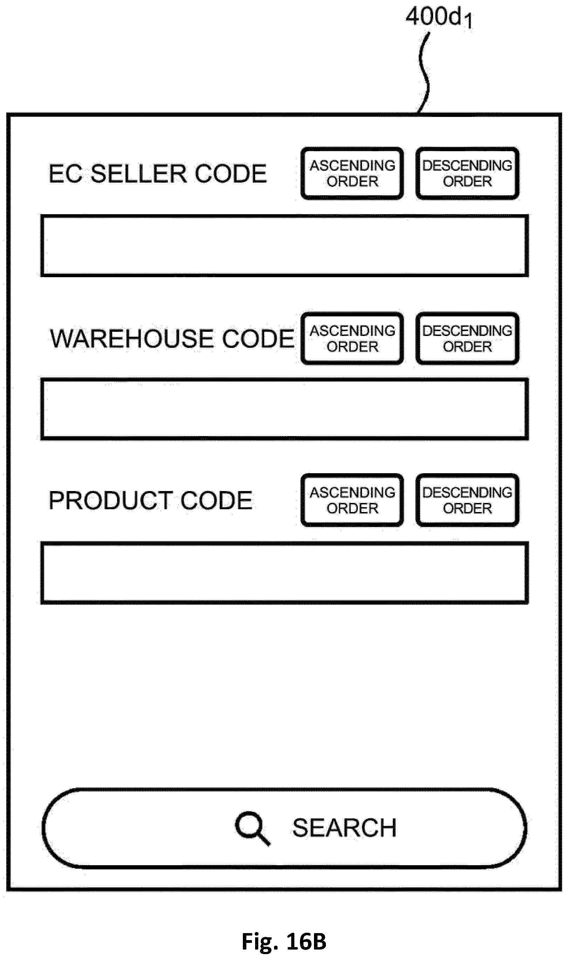

The display information generating means 101 of the tax-free EC mediation server 1 generates and transmits display information for displaying a screen displaying the order information 112 in response to the requests from the terminal 4 and the terminal 31. For example, the screen displaying the order information 112 has a configuration as illustrated in Fig. 16.

Figs. 16A and 16B are schematic diagrams illustrating examples of the screen displayed on the display units of the terminal 4 and the terminal 31.

A screen 400 illustrated in Fig. 16A is a screen for displaying details of the order information 112, the screen being displayed on the display units of the terminal 4 and the terminal 31. The screen 400 includes a target period setting field 400a for setting a target period for display of an order history, a displayed number-of-orders selection menu 400b for selecting the number of orders to be displayed in the order history, a displayed page selection button 400c for selecting a page to be displayed, a displayed contents sorting menu 400d for selecting an item for sorting the displayed contents of the order history, and a history display field 400e displaying details of the order history.

The history display field 400e includes an order code for identifying one order regardless of the number of shops and the number of items, a sales code for identifying a shop (tax-free shop), a portable terminal ID for identifying the portable terminal 2, a purchaser indicating the name and the nationality of the purchaser, an EC seller code for identifying a seller on the electronic commerce service, a warehouse code for identifying the distribution center 61, a product code for identifying the item, a product name indicating the name of the item, a unit price indicating a unit price of the item, the quantity of the purchased item, a total purchase amount, a check-in/check-out date and time indicating the date and time of check-in and check-out of the purchaser at the hotel, a purchase date and time indicating the date and time of purchase of the item, an expected item arrival date indicating an expected date when the item arrives at the receiving place, and a receiving place indicating the place where the item is received.

Each item of the displayed contents sorting menu 400d is an object to be operated. The contents of the history display field 400e are narrowed down and displayed by an input code in the operated item. The contents of the history display field 400e are sorted and displayed with priority on the operated item. When "code" is operated among the items of the displayed contents sorting menu 400d, a code searching/sorting menu 400d1 illustrated in Fig. 16B is displayed.

The code searching/sorting menu 400d1 illustrated in Fig. 16B includes a search box for inputting a target code and performing a search for the EC seller code, the warehouse code, and the product code and a sorting button for performing sorting and display in ascending order or descending order for the target code.

For example, the staff member 9 narrows down the order history by the sales code, the portable terminal ID kept in the hotel 60, or the receiving place or sorting the order history by the check-in/check-out date and time or the expected item arrival date on the screen 400 by operating the terminal 4 to check the displayed contents of the history display field 400e, thereby managing arrival and hand-over of the item and managing the sales situation. As illustrated in Fig. 16A, when the traveler 7 makes payment for the purchase price to the hotel 60 as tax exemption, since the traveler 7 is eligible for tax exemption for the tax-free shop, the total amount is displayed in a state excluding a consumption tax as "TAX FREE" in the history display field 400e.

For example, the staff member 8 narrows down the order history by the EC seller code, the warehouse code, or the product code or sorting the order history by the receiving place on the screen 400 by operating the terminal 31 to check the displayed contents of the history display field 400e, thereby managing pickup and packaging, managing the delivery date and time, and managing the sales situation. The tax-free shop corresponds to a shop to which items are wholesaled in the country for the store on the electronic commerce service. Thus, when a transaction with the hotel 60 is browsed using the terminal 31, consumption tax is included in the display of the history display field 400e. Similarly, also when an administrator of the tax-free EC mediation server 1 browses the details of the order information 112 using a terminal (not illustrated), since the store on the electronic commerce service and the tax-free shop are subjects of domestic commerce, consumption tax is included in the display of the history display field 400e.

### (Effects of Embodiment)

According to the above embodiment, the portable terminal 2 with the tax-free application 20 installed is lent to the traveler 7. The traveler 7 orders an item at a tax-free price, the item being ordinary sold without tax exemption, by making access to the EC server 3 through the tax-free EC mediation sever 1 using the tax-free application 20 of the portable terminal 2. The ordered item is delivered to the hotel 60 from the distribution center 61 under control of the EC server 3. Tax exemption processing and payment are performed using the terminal 4 of the hotel 60 licensed as a tax-free shop. Thus, it is possible to receive the order without the necessity for the traveler 7 to visit the shop and sell the item subjected to tax exemption processing without the necessity of online payment.

Moreover, the tax-free EC mediation server 1 acquires item information for non-tax-free sale from the item DB 30 of the EC server 3, performs calculation of tax exemption and addition of information about tax exemption on the item information, and displays the item information on the display of the portable terminal 2. Thus, even when a service of the EC server 3 is not provided for tax-free sale, items can be sold tax free.

### [Other Embodiments]

Note that the present invention is not limited to the above embodiment and can be variously modified without departing from the gist of the present invention.

Some of the functions of the means 100 to 108 of the control unit 10 of the tax-free EC mediation server 1 may be operated in another server, and some of the pieces of information 111 to 116 in the storage unit 11 may be stored in another place, without changing the gist of the present invention. Moreover, the functions of the tax-free EC mediation server 1, the portable terminal 2, the EC server 3, the terminal 31, and the terminal 4 may be operated on the respective apparatuses, and the functions of the apparatuses may be appropriately combined or separated and thus changed without changing the gist of the present invention.

In the above embodiment, the functions of the means 100 to 108 of the control unit 10 are implemented through the program. However, all or some of the means may be implemented through hardware such as ASIC. Moreover, the program used in the above embodiment may be provided by being stored on a recording medium such as a CD-ROM. Furthermore, replacement, deletion, or addition of the steps described in the above embodiment can be made without changing the gist of the present invention.

Moreover, an aspect of the present invention provides an information processing program, an information processing apparatus, and an information processing system described below.
[1] An information processing program for causing a computer to function as:
   a user information transmitting and receiving means for receiving, from a terminal used by a user, user information identifying the user;
   a display information generating means for generating display information for displaying, on the terminal, item information of an item, the item being sold in a store on an electronic commerce service, with tax-free details;
   an order information transmitting means for transmitting, on the basis of at least item information of an item selected by the user on the terminal, the received user information, and information of a tax-free shop designated by the user as a receiving place, order information for ordering the item selected by the user tax free to the store;
   a tax-free information transmitting means for transmitting, on the basis of at least the item information of the selected item and the user information, tax-free information for preparing a tax exemption document to a terminal of the tax-free shop; and
   a payment information transmitting means for transmitting, on the basis of at least the received selected item information of the selected item and the received user information, payment information for the user to make payment for the selected item to the terminal of the tax-free shop.
[2] The information processing program according to [1] for further causing the computer to function as a settlement information transmitting and receiving means for generating settlement information for settling payment for an item that is sold or has been sold in the tax-free shop between the tax-free shop and the store and transmit the settlement information to the tax-free shop and the store.
[3] The information processing program according to [1] or [2], wherein the user information transmitting and receiving means receives, as the user information, at least a name, a nationality, a date of birth, a status of residence, a date of landing, a passport type, and a passport number.
[4] The information processing program according to any one of [1] to [3], wherein, when a total amount of the item selected by the user on the terminal does not meet tax exemption conditions, the display information generating means generates display information for displaying the item information with non-tax-free details.
[5] An information processing apparatus including:
   a user information transmitting and receiving means for receiving, from a terminal used by a user, user information identifying the user;
   a display information generating means for generating display information for displaying, on the terminal, item information of an item, the item being sold in a store on an electronic commerce service, with tax-free details;
   an order information transmitting means for transmitting, on the basis of at least item information of an item selected by the user on the terminal, the received user information, and information of a tax-free shop designated by the user as a receiving place, order information for ordering the item selected by the user tax free to the store;
   a tax-free information transmitting means for transmitting, on the basis of at least the item information of the selected item and the user information, tax-free information for preparing a tax exemption document to a terminal of the tax-free shop; and
   a payment information transmitting means for transmitting, on the basis of at least the received selected item information of the selected item and the received user information, payment information for the user to make payment for the selected item to the terminal of the tax-free shop.
[6] An information processing system including:
   a terminal used by a user;
   a store selling an item on an electronic commerce service;
   a terminal of a tax-free shop selling an item tax free; and
   an information processing apparatus including: a user information transmitting and receiving means for receiving, from the terminal, user information identifying the user; a display information generating means for generating display information for displaying, on the terminal, item information of an item, the item being sold in a store on an electronic commerce service, with tax-free details; an order information transmitting means for transmitting, on the basis of at least item information of an item selected by the user on the terminal, the received user information, and information of a tax-free shop designated by the user as a receiving place, order information for ordering the item selected by the user tax free to the store; a tax-free information transmitting means for transmitting, on the basis of at least the item information of the selected item and the user information, tax-free information for preparing a tax exemption document to the terminal of the tax-free shop; and a payment information transmitting means for transmitting, on the basis of at least the received selected item information of the selected item and the received user information, payment information for the user to make payment for the selected item to the terminal of the tax-free shop.

### Industrial Applicability

Provided are an information processing program, an information processing apparatus, and an information processing system that receive an order without the necessity for a user to visit a shop and sell an item subjected to tax exemption processing without the necessity of online payment.

### Reference Signs List

1 tax-free EC mediation server
2 portable terminal
3 EC server
4 terminal
5 network
6 tax-free EC system
7 traveler
8 staff member
9 staff member
10 control unit
11 storage unit
12 communication unit
20 tax-free application
31 terminal
60 hotel
61 distribution center
100 operation receiving means
101 display information generating means
102 user information transmitting and receiving means
103 item information transmitting and receiving means
104 order information transmitting and receiving means
105 tax-free information creating means
106 tax-free information transmitting means
107 payment information transmitting and receiving means
108 settlement information transmitting and receiving means
110 tax-free EC mediation program
111 user information
112 order information
113 tax-free shop information
114 tax-free information
115 payment information
116 settlement information

## Claims

1. An information processing program for causing a computer to function as:
a user information transmitting and receiving means for receiving, from a terminal used by a user, user information identifying the user;
a display information generating means for generating display information for displaying, on the terminal, item information of an item which is sold without tax exemption in a store on an electronic commerce service, with tax-free details by performing calculation of tax exemption and/or addition of information of tax exemption on the item information;
an order information transmitting means for transmitting, on the basis of at least item information of an item selected by the user on the terminal, the received user information, and information of a tax-free shop designated by the user as a receiving place, order information which provides an instruction to deliver the item selected by the user to the tax-free shop to sell the item tax free by the tax-free shop to the store;
a tax-free information transmitting means for transmitting, on the basis of at least the item information of the selected item and the user information, tax-free information for preparing a tax exemption document to a terminal of the tax-free shop; and
a payment information transmitting means for transmitting, on the basis of at least the received selected item information and the received user information, payment information for the user to make payment for the selected item to the terminal of the tax-free shop.

2. The information processing program according to claim 1 for further causing the computer to function as a settlement information transmitting and receiving means for generating settlement information for settling payment for an item that is sold or has been sold in the tax-free shop between the tax-free shop and the store, and transmitting the settlement information to the tax-free shop and the store.

3. The information processing program according to claim 1 or 2, wherein the user information transmitting and receiving means receives, as the user information, at least a name, a nationality, a date of birth, a status of residence, a date of landing, a passport type, and a passport number.

4. The information processing program according to any one of claims 1 to 3, wherein, when a total amount of the item selected by the user on the terminal does not meet tax exemption conditions, the display information generating means generates display information for displaying the item information with non-tax-free details.

5. An information processing apparatus comprising:
a user information transmitting and receiving means for receiving, from a terminal used by a user, user information identifying the user;
a display information generating means for generating display information for displaying, on the terminal, item information of an item which is sold without tax exemption in a store on an electronic commerce service, with tax-free details by performing calculation of tax exemption and/or addition of information of tax exemption on the item information;
an order information transmitting means for transmitting, on the basis of at least item information of an item selected by the user on the terminal, the received user information, and information of a tax-free shop designated by the user as a receiving place, order information which provide an instruction to deliver the item selected by the user to the tax-free shop to sell the item tax free by the tax-free shop to the store;
a tax-free information transmitting means for transmitting, on the basis of at least the item information of the selected item and the user information, tax-free information for preparing a tax exemption document to a terminal of the tax-free shop; and
a payment information transmitting means for transmitting, on the basis of at least the received selected item information and the received user information, payment information for the user to make payment for the selected item to the terminal of the tax-free shop.

6. An information processing system comprising:
a terminal used by a user;
a store selling an item without tax exemption on an electronic commerce service;
a terminal of a tax-free shop selling an item tax free; and
an information processing apparatus including: a user information transmitting and receiving means for receiving, from the terminal, user information identifying the user; a display information generating means for generating display information for displaying, on the terminal, item information of an item which is sold without tax exemption in the store, with tax-free details by performing calculation of tax exemption and/or addition of information of tax exemption on the item information; an order information transmitting means for transmitting, on the basis of at least item information of an item selected by the user on the terminal, the received user information, and information of a tax-free shop designated by the user as a receiving place, order information to the store, the order information providing an instruction to deliver the item selected by the user to the tax-free shop to sell the item tax free by the tax-free shop; a tax-free information transmitting means for transmitting, on the basis of at least the item information of the selected item and the user information, tax-free information for preparing a tax exemption document to the terminal of the tax-free shop; and a payment information transmitting means for transmitting, on the basis of at least the received selected item information and the received user information, payment information for the user to make payment for the selected item to the terminal of the tax-free shop.
